(19) **Europäisches Patentamt / European Patent Office / Office européen des brevets**

(11) **EP 1 863 683 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **06707917.8**

(22) Anmeldetag: **31.01.2006**

(51) Int Cl.:
**B60R 21/01** *(2006.01)* **B60R 21/34** *(2006.01)*

(86) Internationale Anmeldenummer:
**PCT/EP2006/050545**

(87) Internationale Veröffentlichungsnummer:
**WO 2006/100148 (28.09.2006 Gazette 2006/39)**

(54) **VERFAHREN UND VORRICHTUNG ZUR ERZEUGUNG EINES AUSLÖSESIGNALS FÜR EINE INSASSENSCHUTZVORRICHTUNG**

METHOD AND DEVICE FOR GENERATING A TRIGGERING SIGNAL FOR A PASSENGER PROTECTION DEVICE

PROCEDE ET DISPOSITIF DE GENERATION D'UN SIGNAL DE DECLENCHEMENT POUR UN DISPOSITIF DE PROTECTION DES OCCUPANTS

(84) Benannte Vertragsstaaten:
**DE ES FR GB**

(30) Priorität: **24.03.2005 DE 102005013595**

(43) Veröffentlichungstag der Anmeldung:
**12.12.2007 Patentblatt 2007/50**

(73) Patentinhaber: **ROBERT BOSCH GMBH**
**70442 Stuttgart (DE)**

(72) Erfinder:
• **MACK, Frank**
**70376 Stuttgart (DE)**
• **KOLATSCHEK, Josef**
**71263 Weil der Stadt (DE)**
• **KRIEG, Markus**
**71701 Schwieberdingen (DE)**

(56) Entgegenhaltungen:
WO-A-97/18108          DE-A1- 10 002 110
DE-A1- 10 145 698     DE-A1-6102004 018 35

EP 1 863 683 B1

**Beschreibung**

**Stand der Technik**

Die Erfindung geht aus von einem Verfahren zur Erzeugung eines Auslösesignals für eine Insassenschutzvorrichtung nach der Gattung des unabhängigen Patentanspruchs 1 oder von einer zugehörigen Vorrichtung.

Durch die Ankündigung der Einführung eines EU-Gesetzes zur Reduzierung von Verletzungen eines Fußgängers bei einem Zusammenstoß zwischen einem Fußgänger und einem Fahrzeug, müssen neue Fahrzeuge so konstruiert werden, dass die Verletzungen des Fußgängers bei einer Kollision innerhalb der in diesem EU-Gesetz geforderten Grenzen bleiben.

Eine erste Strategie zur Reduzierung von Verletzungen von Fußgängern zielt darauf ab, durch Änderungen an der Stoßstange und am Design des Fahrzeuges eine Knautschzone für den Fußgänger zu schaffen, um somit durch eine passive Lösung die Verletzungsgefahr zu reduzieren.

Eine zweite Strategie versucht durch eine geeignete Sensorik den Aufprall eines Fußgängers zu erkennen und anschließend durch ein aktives Ansteuern einer Fußgäagerschutzvorrichtung, wie beispielsweise von Außenairbags an den A-Säulen und/oder durch Anheben der Motorhaube, die benötigte Knautschzone zu schaffen. Bei der aktiven Lösung können verschiedene Sensorprinzipien benutzt werden, wie z.B. Beschleunigungssensoren, Drucksensoren, Klopfsensoren, piezoelektrische oder optische Sensoren usw.

Zudem sind Verfahren und Vorrichtungen zur Erzeugung von Auslösesignalen für Insassenschutzvorrichtungen bekannt, wie z.B. Airbags, Gurtstraffer usw., welche eine Mehrzahl von Sensoren zur Unfallerkennung und Unfallklassifizierung aufweisen. Üblicherweise werden so genannte Upfrontsensoren in einer vorderen Crashzone eingesetzt, um eine frühe Unfallerkennung und Unfallklassifizierung zu erreichen.

Aus der gattungsgemäßen DE 10 2004 018 356 A1 ist eine Kollisionsobjektunterscheidungsvorrichtung bekannt, bei der auf einer Vorderfläche eines Stoßfängers ein Vorderflächenseitensensor und auf einer Rückenseitenfläche des Stoßfängers ein Rückflächenseitensensor vorgesehen sind, Das genaue unterscheiden eines Fußgängers von anderen Objekten ist, basierend auf der Kombination der binären Ausgangssignalpegel zweier Sensoren oder basierend auf der Einzeitdifferenz- oder der Einzeitdauer der zwei Sensoren für den Fall der Fahrzeugkollision möglich.

Vorteile der Erfindung

Das erfindungsgemäße Verfahren zur Erzeugung eines Auslösesignals für eine Insassenschutzvorrichtung mit den Merkmalen des unabhängigen Patentanspruchs 1 hat demgegenüber Vorteile. Es ist bekannt, dass die Relativgeschwindigkeit durch eine Auswertung von Signalen , welche an mindestens zwei mit einem vorgegeben Abstand in x-Richtung versetzt angeordneten Messpunkten von Sensoren erfasst werden, bei einem Unfall sehr genau bestimmt werden kann. Dadurch können langsame Unfälle mit harten Hindernissen, beispielsweise ein Aufprall mit einer Geschwindigkeit von 15km/h gegen eine starre Wand, bei welchen die Insassenschutzmittel nicht auslösen sollen, von schnellen Unfällen mit weniger harten Hindernissen unterschieden werden, beispielsweise bei einem Aufprall mit einer Geschwindigkeit von 64km/h gegen eine deformierbare Barriere, bei welchen die Insassenschutzmittel ausgelöst werden sollen. Bei Systemen ohne Upfrontsensoren stellt dies eine schwierige Aufgabe dar, da zentrale als Beschleunigungssensoren ausgeführte Sensoren, welche üblicherweise am Fahrzeugtunnel angeordnet sind, in beiden Fällen ein ähnliches Beschleunigungssignal messen.

Die Kenntnis der genauen Unfallrelativgeschwindigkeit ermöglicht in vorteilhafter Weise bei der Erzeugung eines Auslösesignals eine sichere und robuste Ansteuerung der Insassenschutzvorrichtungen. Dadurch wird ein optimaler Schutz der Insassen bei gleichzeitiger Minimierung der Kosten gewährleistet, die durch eine ungewollte Auslösung der Insassenschutzvorrichtung entstehen können. Es ist bekannt, dass ausgehend von den verfügbaren Sensorsignalen unter Einbeziehung der Relativgeschwindigkeit, ob in der vorliegenden Situation nach einer erkannte Kollision mit einem Objekt eine Auslösung bzw. eine Aktivierung der Insassenschutzvorrichtung erforderlich ist oder nicht.

Die erfindungsgemäße Vorrichtung zur Erzeugung eines Auslösesignals für eine Insassenschutzvorrichtung mit den Merkmalen des unabhängigen Patentanspruchs 4 umfasst die erforderlichen Mittel zur Durchführung des erfindungsgemäßen Verfahrens zur Erzeugung eines Auslösesignals für eine Insassenschutzvorrichtung.

Zur Bestimmung der Unfallrelativgeschwindigkeit werden mindestens drei Messpunkte symmetrisch in einem Fahrzeugstoßfänger angeordnet werden, deren. Signale jeweils von zugehörigen Beschleunigungssensoren erfasst werden, wobei ein erster Messpunkt in der Mitte des Fahrzeugstoßfängers, ein zweiter Messpunkt in Fahrtrichtung links vom ersten Messpunkt und ein dritter Messpunkt in Fahrtrichtung rechts vom ersten Messpunkt angeordnet werden. Der vorgegebene Abstand entspricht einer lotrechten Entfernung des ersten Messpunktes von einer gedachten Verbindungslinie zwischen dem zweiten und dritten Messpunkt. Der Abstand wird durch die Bauform des Stoßfänger vorgegeben, welcher in der Regel gewölbt ausgeführt ist, so dass der zweite und dritte Messpunkt um den vorgegebenen Abstand in Fahrtrichtung weiter hinten als der erste Messpunkt angeordnet sind. Wird nun ein Hindernis getroffen, so erzeugt der erste Beschleunigungssensor zu diesem Zeitpunkt zuerst ein Crashsignal. Erst nach einer gewissen Zeitspanne erzeugen auch die beiden äußeren Beschleunigungssensoren aufgrund des Aufpralls ein Crashsignal, nämlich genau zu dem Zeitpunkt, an welchem die weiteren Beschleunigungssensoren Kontakt mit dem getroffenen Objekt haben. Ist die Zeitspanne bekannt, welche zum Zurücklegen des vorgegebenen Abstandes erforderlich ist, dann kann aus diesen Informationen in vorteilhafter Weise die Unfallrelativgeschwindigkeit berechnet werden.

Durch die in x-Richtung und/oder in y-Richtung versetzte Anordnung der mindestens zwei Messpunkte werden die von den zugehörigen Beschleunigungssensoren erfassten Signale in vorteilhafter Weise zur Bestimmung eines Auftreffzeitpunktes und eines Auftreffortes ausgewertet.

Der Zeitpunkt des ersten von einem der Beschleunigungssensoren erfassten Crashsignals wird als Auftreffzeitpunkt ausgegeben. Durch Auswerten der Signale des zweiten und dritten Beschleunigungssensors wird erkannt, ob ein symmetrischer oder ein asymmetrischer Aufprall vorliegt. Dadurch kann das erfindungsgemäße Verfahren durch Auswerten der Beschleunigungssensoren des Fußgängerschutzsystems im Prinzip dieselbe Erkennungsleistung wie ein Precrashsystem zur Verfügung stellen, ohne dass eine teure vorausschauende Sensoreinheit erforderlich ist.

Zudem ist das erfindungsgemäße Verfahren in vorteilhafter Weise völlig unbeeinflusst von Witterungsbedingungen und kann bei allen Objekten und in allen Geschwindigkeitsbereichen angewendet werden; während manche der herkömmlichen vorausschauenden Systeme im Betrieb bei bestimmten Objekten, Witterungsbedingungen oder Geschwindigkeiten Probleme bei der Signalerfassung aufweisen können.

Die bestimmte Unfallrelativgeschwindigkeit und der bestimmte Auftreffzeitpunkt und/ die bestimmte Symmetrie werden nachfolgenden Auslöseverfahren für Personenschutzmittel zur Verfügung gestellt, d.h. die bestimmten Merkmale können sowohl von Auslösevorrichtungen von Insassenschutzmitteln als auch von Auslösevorrichtungen von Fußgängerschutzmitteln verwendet werden.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Erzeugung eines Auslösesignals für eine Insassenschutzvorrichtung und der im unabhängigen Patentanspruch 4 angegebenen zugehörigen Vorrichtung möglich.

Besonders vorteilhaft ist, dass die Signale von mindestens zwei Sensoren einer Fußgängerschutzvorrichtung ausgewertet werden. Dadurch können dieselben Sensoren außer zur Fußgängererkennung auch als Upfrontsensoren zur Unfallerkennung bzw. zur Unfallklassifizierung eingesetzt werden, um eine optimale Auslösung der Insassenschutzmittel, wie z.B. Airbag, Gurtstraffer usw. zu ermöglichen. Dadurch können die Kosten für die zusätzlichen Upfrontsensoren eingespart werden.

Zeichnung

Ein Ausführungsbeispiel der Erfindung ist in der Zeichnung dargestellt und wird in der nachfolgenden Beschreibung näher erläutert.

Es zeigen

Figur 1 ein schematisches Blockdiagramm einer Vorrichtung zur Durchführung des erfindungsgemäßen Verfahrens,
Figur 2 ein Weg/Zeit-Diagramm zur Bestimmung der Zeitdifferenz $\Delta t$ in Abhängigkeit eines Abstandes d,
Figur 3 eine schematische Darstellung von Beschleunigungssignalen bei einem Crash mit einer Geschwindigkeit von 15km/h gegen eine starre Wand,
Figur 4 eine schematische Darstellung von Extremwerten der Beschleunigungssignale bei einem Crash mit einer Geschwindigkeit von 15km/h gegen eine starre Wand,
Figur 5 eine schematische Darstellung von Beschleunigungssignalen bei einem Offset-Crash mit einer Geschwindigkeit von 64km/h gegen eine deformierbare Barriere, und
Figur 6 eine schematische Darstellung von Extremwerten der Beschleunigungssignale bei einem Offset-Crash mit einer Geschwindigkeit von 64km/h gegen eine deformierbare Barriere.

Beschreibung

Fahrzeuge weisen eine Vielzahl von Sensoren zur Unfallerkennung und Unfallklassifizierung auf. Üblicherweise werden so genannte Upfrontsensoren in einer vorderen Crashzone eingesetzt, um eine frühe Unfallerkennung und Unfallklassifizierung zu erreichen. Außerdem sind Fußgängerschutzsysteme mit Beschleunigungssensoren bekannt, welche im Fahrzeugstoßfänger angeordnet sind, wobei die Signale der Beschleunigungssensoren ausgewertet werden, um einen Zusammenstoß mit einem Fußgänger zu erkennen und um eine Auslöseentscheidung für Fußgängerschutzmittel zu unterstützen.

Es wird vorgeschlagen, zur Bestimmung einer Unfallrelativgeschwindigkeit Signale von mindestens zwei mit einem vorgegebenen Abstand in x-Richtung versetzt angeordneten Messpunkten auszuwerten, wobei der zeitliche Abstand zwischen einem von einem ersten Sensor an einem ersten Messpunkt erfassten Crashsignal und einem von einem weiteren Sensor an einem weiteren Messpunkt erfassten Crashsignal bestimmt wird.

Die Sensoren zur Erfassung der Signale können beispielsweise am jeweiligen Messpunkt angeordnet werden oder mit dem jeweiligen Messpunkt mechanisch gekoppelt werden, so dass ein Aufprall auf den Stoßfänger durch die gute mechanische Kopplung sofort zu dem zugehörigen Sensor übertragen wird. Die Sensoren sind vorzugsweise als Beschleunigungssensoren ausgeführt, wobei die Crashsignale jeweils einem Spitzenwert des vom jeweiligen Beschleunigungssensor erfassten Beschleunigungssignals entsprechen.

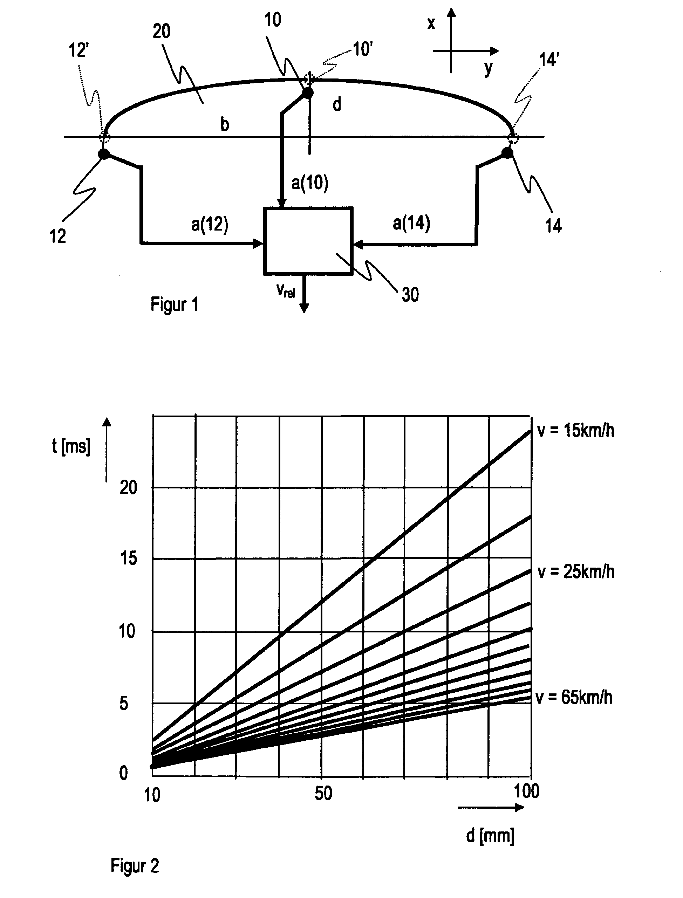

Wie aus Figur 1 ersichtlich ist umfasst ein Ausführungsbeispiel einer Vorrichtung zur Durchführung des Verfahrens zur Erzeugung eines Auslösesignals für Insassenschutzvorrichtungen, drei in einem Fahrzeugstoßfänger 20 angeordneten Beschleunigungssensoren 10, 12, 14 und eine Auswerte- und eine Steuereinheit 30, welche Signale a (10), a(12), a(14) der Beschleunigungssensoren (10, 12, 14) empfängt und auswertet. Die Beschleunigungssensoren 10, 12, 14 sind jeweils mechanisch mit gepunktet dargestellten Messpunkten 10', 12', 14' gekoppelt, so dass ein Aufprall sofort an den zugehörigen Sensor 10, 12, 14 übertragen wird. Bei einer alternativen nicht dargestellten Ausführungsform, stimmen der Messpunkt 10', 12', 14' und der Einbauort des zugehörigen Sensors 10, 12, 14 überein, so dass der jeweilige Sensor einen Aufprall direkt erfasst.

Wie aus Figur 1 weiter ersichtlich ist, sind die drei Messpunkte 10', 12', 14' symmetrisch im Fahrzeugstoßfänger 20 angeordnet, wobei ein erster Beschleunigungssensor 10 mit einem in der Mitte des Fahrzeugstoßfängers 20 angeordneten ersten Messpunkt 10' gekoppelt ist, ein zweiter Beschleunigungssensor 12 ist mit einem in Fahrtrichtung links vom ersten Messpunkt 10' angeordneten zweiten Messpunkt 12' gekoppelt und ein dritter Beschleunigungssensor 14 ist mit einem in Fahrrichtung rechts vom ersten Messpunkt 10' angeordneten dritten Messpunkt 14' gekoppelt. Der erste Messpunkt 10' ist mit einem vorgegebenen Abstand d in x-Richtung versetzt zum zweiten Messpunkt 12' oder zum dritten Messpunkt 14' angeordnet. Der vorgegebenen Abstand d entspricht einer lotrechten Entfernung des ersten Messpunktes 10' von einer gedachten Verbindungslinie b zwischen dem zweiten und dritten Messpunkt 12', 14'. Der Abstand d wird von der Bauform des Fahrzeugstoßfängers 20 vorgegeben. Da der Stoßfänger 20 in der Regel gewölbt ausgeführt ist, sind der zweite und dritte Messpunkt 12', 14' bei der dargestellten symmetrischen Anordnung um einen Abstand d weiter hinten als der erste Messpunkt 10' angeordnet. Wird nun ein Hindernis getroffen, so registriert der erste Sensor 10 zuerst ein Crashsignal, d.h. das Beschleunigungssignal a(10) mit einem Spitzenwert. Erst nach einer gewissen Zeitspanne $\Delta t$ registrieren auch der zweite und/oder der dritte Beschleunigungssensor 12, 14 ein Crashsignal, d.h. die Beschleunigungssignale a(12) und/oder a(14) mit einem Spitzenwert, nämlich zu dem Zeitpunkt, an welchem der zweite Messpunkt 12' und/oder der dritte Messpunkt 14' Kontakt mit dem getroffenen Objekt haben. Die Auswerte- und Steuereinheit 30 ermittelt zur Bestimmung einer Unfallrelativgeschwindigkeit $v_{rel}$ den zeitlichen Abstand $\Delta t$ zwischen dem vom ersten Beschleunigungssensor 10 erfassten Crashsignal und dem vom zweiten und/oder dritten Beschleunigungssensor 12, 14 erfassten Crashsignal. Die Crashsignale entsprechen jeweils dem Spitzenwert des vom jeweiligen Beschleunigungssensor 10, 12, 14 erfassten Beschleunigungssignals a(10), a(12), a(14). Da der Abstand d zwischen den Messpunkten bekannt ist, kann die Unfallrelativgeschwindigkeit $v_{rel}$ nach der Gleichung (1) berechnet werden.

$$v_{rel} = d / \Delta t \qquad\qquad\qquad (1)$$

Der Abstand d des ersten Messpunktes 10' zur gedachten Verbindungslinie b zwischen dem zweiten und dritten Messpunkt 12', 14' liegt bauartbedingt im Bereich von 5 bis 15cm. Daher kann über den relevanten Unfallgeschwindigkeitsbereich von 15 bis 65km/h innerhalb von 3 bis 25ms die Unfallrelativgeschwindigkeit $V_{rel}$ bestimmt werden. Figur 2 zeigt ein Weg/Zeit-Diagramm mit mehreren Geschwindigkeitskennlinien im Bereich von 15 bis 65km/h zur Bestimmung der Zeitdifferenz $\Delta t$ in Abhängigkeit des Abstandes d. Die Differenz zwischen zwei benachbarten Geschwindigkeitskennlinien beträgt 5km/h. Im beschriebenen Ausführungsbeispiel beträgt der Abstand d = 80mm.

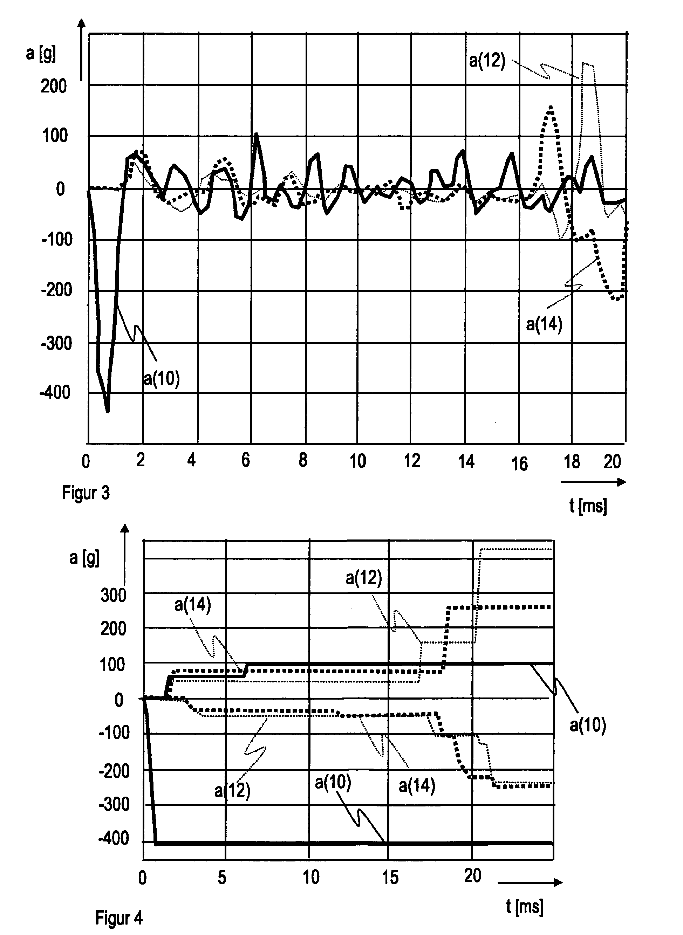

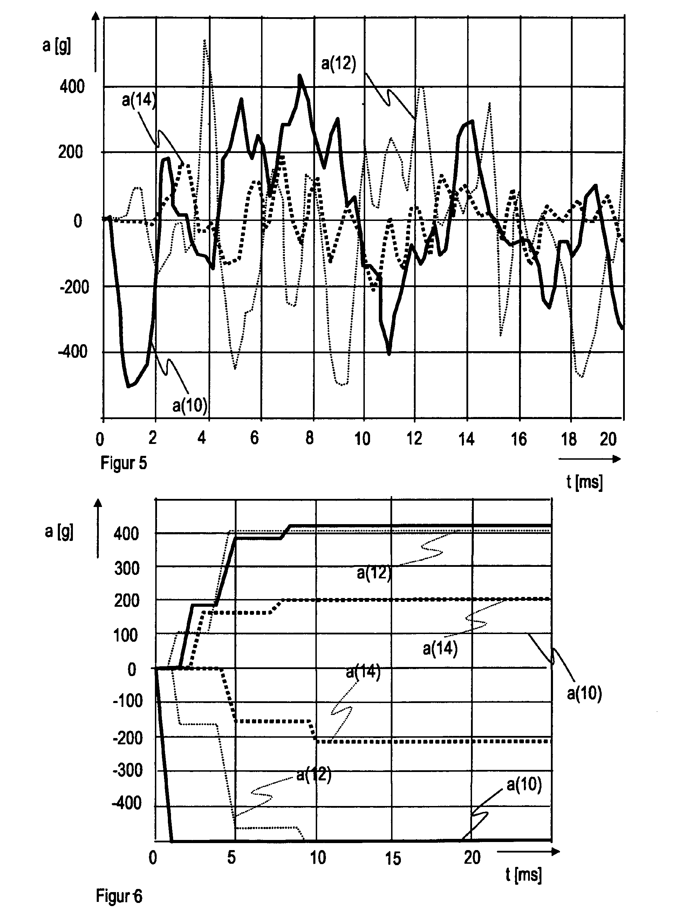

Zur Berechnung der Unfallrelativgeschwindigkeit $V_{rel}$ bestimmt die Auswerte- und Steuereinheit 30 Extremwerte der Beschleunigungssignale a(10), a(12) und a(14). Die berechnete Unfallrelativgeschwindigkeit $V_{rel}$ kann zur Verbesserung der Unfallklassifizierung verwendet werden, d.h. zur besseren Bestimmung der Unfallschwere. Nachfolgend wird die Bestimmung der Extremwerte der Beschleunigungssignale a(10), a(12) und a(14) unter Bezugnahme auf die Figuren 3 bis 6 beschrieben. Die Figuren 3 und 4 zeigen Signale, welche bei einem Unfall mit einer langsamen Geschwindigkeit von 15km/h mit einer starren Wand erzeugt werden, und die Figuren 5 und 6 zeigen Signale, welche bei einem Unfall mit einer höheren Geschwindigkeit von 64km/h mit einer deformierbaren Barriere erzeugt werden.

Figur 3 zeigt die Beschleunigungssignale a(10), a(12), a(14) der drei Beschleunigungssensoren 10, 12, 14 bei einem Aufprall mit einer Geschwindigkeit von 15km/h auf eine starre Wand. Die entsprechenden gehaltenen Extremwerte der Beschleunigungssignale a(10), a(12), a(14) sind in Figur 4 dargestellt. Wie aus den Figuren 3 und 4 ersichtlich ist, misst der erste Beschleunigungssensor 10 nach ungefähr 1ms einen Beschleunigungsspitzenwert. Der zweite und dritte Beschleunigungssensor 12, 14 registrieren ungefähr nach Ablauf von 20ms eine Beschleunigung die deutlich größer als 150g ist (Erdbeschleunigung g = 9,81m/s$^2$). Somit ermittelt die Auswerte- und Steuereinheit 30 eine Zeitdifferenz At = 19ms zwischen dem Spitzenwert des ersten Beschleunigungssignals a(10) und dem Spitzenwert des zweiten und/ oder dritten Beschleunigungssignals a(12), a(14). Mit dem vorgegebenen Abstand d von 80mm ergibt sich für diesen Fall gemäß Gleichung (1) eine Unfallrelativgeschwindigkeit v$_{rel}$ = 80mm/19ms = 4.2m/s = 15,2km/h.

Figur 5 zeigt die Beschleunigungssignale a(10), a(12), a(14) der drei Beschleunigungssensoren 10, 12, 14 bei einem Aufprall mit einer Geschwindigkeit von 64km/h auf eine deformierbare Barriere. Die entsprechenden gehaltenen Extremwerte der Beschleunigungssignale a(10), a(12), a(14) sind in Figur 6 dargestellt. Wie aus den Figuren 5 und 6 ersichtlich ist, misst der erste Beschleunigungssensor 10 nach ungefähr 1ms einen Beschleunigungsspitzenwert, während der zweite Beschleunigungssensor nach ungefähr 5ms einen Beschleunigungsspitzenwert misst, welcher größer als 150g ist. Somit ermittelt die Auswerte- und Steuereinheit 30 eine Zeitdifferenz At = 4ms. Mit dem vorgegebenen Abstand d von 80mm ergibt sich gemäß Gleichung (1) eine Unfallrelativgeschwindigkeit v$_{rel}$ = 80mm/4ms = 20m/s = 72 km/h.

Wird diese Information einem zentralen nicht dargestellten Steuergerät zur Auslösung der Insassenschutzmittel zur Verfügung gestellt, dann kann das Signal eines im zentralen Steuergerät angeordneten Beschleunigungssensors bzw. dessen Integral oder andere abgeleitete Größen mit geschwindigkeitsabhängigen Schwellen verglichen werden. So kann eine Auslösung der Insassenschutzmittel im Falle des Unfalls mit der Geschwindigkeit von 15km/h gegen eine starre Wand verhindert und eine sehr frühzeitige Auslösung im Falle des Unfalls mit der Geschwindigkeit von 64km/h mit der deformierbaren Barriere gewährleistet werden.

Insbesondere ist es sehr vorteilhaft, dass die Geschwindigkeitsinformation umso früher zur Verfügung steht, umso höher die Geschwindigkeit ist. Dadurch kann bei Unfällen mit sehr hohen Geschwindigkeiten, eine geforderte frühere Auslösung gewährleistet werden.

Aus den Signalen a(10), a(12), a(14) der Beschleunigungssensoren 10, 12, 14 im Stoßfänger 20 können noch zusätzliche Informationen gewonnen werden. So kann beispielsweise der Unfallbeginn dadurch bestimmt werden, dass der erste Spitzenwert eines der Beschleunigungssignale a(10), a(12), a(14) als Auftreffzeitpunkt festgelegt wird. Wie aus den dargestellten Beispielen ersichtlich ist, kann somit der Auftreffzeitpunkt auf eine Millisekunde genau bestimmt werden. Außerdem kann durch einen Vergleich des Beschleunigungssignals a(12) des zweiten Beschleunigungssensors 12 mit dem Beschleunigungssignal a(14) des dritten Beschleunigungssensors 14 erkannt werden, ob der Aufprall symmetrisch oder asymmetrisch ist. Wie beispielsweise aus Figur 4 ersichtlich ist, sehen der zweite und dritte Beschleunigungssensor bei einem symmetrischen Aufprall ein ähnliches Beschleunigungsminimum zum selben Zeitpunkt bei ca. 20ms. Wie aus Fig. 6 ersichtlich ist, sieht der zweite Beschleunigungssensor 12 bei dem asymmetrischen Unfall mit einer Geschwindigkeit von 64km/h zu einem früheren Zeitpunkt, d.h. bei ca. 5ms, als der dritte Beschleunigungssensor 14 einen Beschleunigungsspitzenwert, woraus geschlossen werden kann, dass der Aufprall mit einem Offset in Richtung des zweiten Messpunktes erfolgt ist, welche mit dem zweiten Beschleunigungssensors 12 gekoppelt ist.

Die durch Auswerten der Sensorsignale a(10), a(12) und a(14) erzeugten Informationen, wie die Unfallrelativgeschwindigkeit v$_{rel}$, den Auftreffzeitpunkt und die Symmetrie, entsprechen den Informationen, welche von herkömmlichen vorausschauenden Systemen, wie z.B. Radar-, Lidar-, Ultraschallsysteme usw., bei einem Precrashsystem zur Verfügung gestellt werden. Das erfindungsgemäße Verfahren ermöglicht eine Auslöseentscheidung für Insassenschutzmittel von vergleichbarer Qualität, jedoch zu deutlich geringeren Kosten als bei vorausschauenden Sensorsystemen. Außerdem ist das erfindungsgemäße Verfahren wesentlich robuster und weniger anfällig für Umwelteinflüsse und kann über den gesamten Geschwindigkeitsbereich und bei allen Objekten eingesetzt werden, während bekannte vorausschauende Sensorsysteme je nach Sensortyp bei bestimmten Geschwindigkeiten und Objekten Schwierigkeiten aufweisen können. Außerdem wird durch die Verwendung der Information der Beschleunigungssensoren 10, 12 14 im Stoßfänger20 die Robustheit gegenüber einem so genannten Misuse deutlich erhöht. Ein Misuse wird beispielsweise durch Schlechtwegstrecken, Bordsteinüberfahrten, Schlaglöchern und ähnlichem verursacht. Da die Sensoren 10, 12, 14 im Stoßfänger 20 angeordnet sind und vom Fahrwerk des Fahrzeugs entkoppelt sind, registrieren sie bei den genannten möglichen Misusefällen praktisch keine Beschleunigung, so dass eine ungewünschte Auslösung der Insassenschutzmittel in diesen Situationen sicher verhindert werden kann.

**Patentansprüche**

1. Verfahren zur Erzeugung eines Auslösesignals für eine Insassenschutzvorrichtung, bei welchem Sensordaten zur Unfallklassifizierung erfasst und ausgewertet werden, wobei zur Bestimmung einer Unfallrelativgeschwindigkeit (v$_{rel}$) Signale (a(10), a(12), a(14)) von mindestens zwei mit einem vorgegebenen Abstand (d) in x-Richtung versetzt angeordneten Messpunkten (10', 12', 14') ausgewertet werden, wobei der zeitliche Abstand (Δt) zwischen einem von einem ersten Sensor (10, 12, 14) an einem ersten Messpunkt (10', 12', 14') erfassten Crashsignal und einem von einem weiteren Sensor (10, 12, 14) an einem weiteren Messpunkt (10', 12', 14') erfassten Crashsignal bestimmt wird, wobei die Sensoren (10, 12, 14) als Beschleunigungssensoren ausgeführt sind, **dadurch gekennzeichnet**

**dass** die Crashsignale jeweils einem Spitzenwert des vom jeweiligen Beschleunigungssensor (10, 12, 14) erfassten Beschleunigungssignal (a(10), a(12), a(14)) entsprechen, dass die Beschleunigungssignale (a(10), a(12), a(14)) von drei Beschleunigungssensoren (10, 12, 14) einer Fußgängerschutzvorrichtung ausgewertet werden, dass zur Bestimmung der Unfallrelativgeschwindigkeit ($v_{rel}$) drei Messpunkte (10', 12', 14') symmetrisch an einem Fahrzeugstoßfänger (20) angeordnet werden, wobei der erste Messpunkt (10') in der Mitte des Fahrzeugstoßfängers (20), ein zweiter Messpunkt (12') in Fahrtrichtung links vom, ersten Messpunkt (10') und ein dritter Messpunkt (14') in Fahrrichtung rechts vom ersten Messpunkt (10') angeordnet werden, wobei der vorgegebenen Abstand (d) einer lotrechten Entfernung des ersten Messpunktes (10') von einer gedachten Verbindungslinie (b) zwischen dem zweiten Messpunkt (12') und dem dritten Messpunkt (14') entspricht, dass die Crashsignale (a(10), a(12), a(14)) der mindestens zwei mit einem vorgegebenen Abstand (d) in x-Richtung versetzt angeordneten Messpunkte (10', 12', 14') zur Bestimmung eines Auftreffzeitpunktes und/oder eines Auftreffores ausgewertet werden, dass der Zeitpunkt eines ersten von einem der Beschleunigungssensoren (10, 12, 14) erfassten Crashsignals als Auftreffzeitpunkt ausgegeben wird und/oder dass durch Auswerten der Signale (a(12), a(14)) des zweiten und dritten Beschleunigungssensors (12, 14) erkannt wird, ob ein symmetrischer oder ein asymmetrischer Aufprall vorliegt, dass die bestimmte Unfallrelativgeschwindigkeit ($v_{rel}$) und der bestimmte Auftreffzeitpunkt und die bestimmte Symmetrie einem nachfolgenden Auslöseverfahren für Personenschutzmittel zur Verfügung gestellt werden, dass der Unfallbeginn **dadurch** bestimmt wird, dass der erste Spitzenwert eines der Beschleunigungssignale (a(10), a(12), a(14)) als Auftreffzeitpunkt festgelegt wird.

2. Verfahren nach Anspruch 1, **dadurch gekennzeichnet, dass** die Sensoren (10, 12, 14) zur Erfassung der Signale (a(10), a(12), a(14)) am jeweiligen Messpunkt (10', 12', 14') angeordnet oder mit dem jeweiligen Messpunkt (10', 12', 14') gekoppelt werden.

3. Verfahren nach einem der Ansprüche 1 oder 2, **dadurch gekennzeichnet, dass** die Unfallrelativgeschwindigkeit ($V_{rel}$) gemäß der Gleichung $V_{rel} = d/\Delta t$ berechnet wird.

4. Vorrichtung zur Erzeugung eines Auslösesignals für eine Insassenschutzvorrichtung, insbesondere zur Durchführung des Verfahrens nach einem der Ansprüche 1 bis 9, welche Sensordaten zur Unfallklassifizierung erfasst und auswertet, mit mindestens einen ersten Sensor (10, 12, 14), welcher an einem ersten Messpunkt (10', 12', 14') ein erstes Signal (a(10), a(12), a(14)) erfasst, mindestens einen zweiten Sensor (10, 12, 14), welcher an einem zweiten Messpunkt (10', 12', 14') ein zweites Signal (a(10), a(12), a(14)) erfasst, wobei der zweite Messpunkt (10', 12', 14') mit einem vorgegebenen Abstand (d) in x-Richtung versetzt zum ersten Messpunkt (10', 12', 14') angeordnet ist, und eine Auswerte- und Steuereinheit (30), welche die Signale (a(10), a(12), a(14)) der mindestens zwei Sensoren (10, 12, 14) zur Bestimmung einer Unfallrelativgeschwindigkeit ($v_{rel}$) auswertet, wobei die Auswerte- und Steuereinheit (30) einen zeitliche Abstand ($\Delta t$) zwischen einem vom ersten Sensor (10, 12,14) erfassten Crashsignal und einem vom zweiten Sensor (10, 12, 14) erfassten Crashsignal bestimmt, wobei die mindestens zwei Sensoren (10, 12, 14) Teil einer Fußgängerschutzvorrichtung sind, **dadurch gekennzeichnet, dass** zur Bestimmung der Unfall-relativgeschwindigkeit ($v_{rel}$) drei Beschleunigungssensoren (10, 12, 14) die Signale (a(10), a(12), a(14) von drei Messpunkten (10', 12', 14') erfassen, welche symmetrisch in einem Fahrzeugstoßfänger (20) angeordnet sind, wobei der erste Messpunkt (10') in der Mitte des Fahrzeugstoßfängers (20), ein zweiter Messpunkt (12') in Fahrtrichtung links vom ersten Messpunkt (10') und ein dritter Messpunkt (14') in Fahrrichtung rechts vom ersten Messpunkt (10') angeordnet sind, wobei der vorgegebenen Abstand (d) einer lotrechten Entfernung des ersten Messpunktes (10') von einer gedachten Verbindungslinie (b) zwischen dem zweiten und dritten Messpunkt (12', 14') entspricht, dass die Crashsignale jeweils einem Spitzenwert des vom jeweiligen Beschleunigungssensor (10, 12, 14) erfassten Beschleunigungssignal (a(10), a(12), a(14)) entsprechen, dass die Crashsignale (a(10), a(12), a(14)) der mindestens zwei mit einem vorgegebenen Abstand (d) in x-Richtung versetzt angeordneten Messpunkte (10', 12', 14') zur Bestimmung eines Auftreffzeitpunktes und eines Auftrefforts ausgewertet werden, dass der Zeitpunkt eines ersten von einem der Beschleunigungssensoren (10, 12, 14) erfassten Crashsignals als Auftreffzeitpunkt ausgegeben wird und/oder dass durch Auswerten der Signale (a(12), a(14)) des zweiten und dritten Beschleunigungssensors (12, 14) erkannt wird, ob ein symmetrischer oder ein asymmetrischer Aufprall vorliegt, dass die bestimmte Unfallrelativgeschwindigkeit ($v_{rel}$) und der bestimmte Auftreffzeitpunkt und die bestimmte Symmetrie einem nachfolgenden Auslöseverfahren für Personenschutzmittel zur Verfügung gestellt werden.

5. Vorrichtung nach Anspruch 4, **dadurch gekennzeichnet, dass** die Sensoren (10, 12, 14) zur Erfassung der Signale (a(10), a(12), a(14)) am jeweiligen Messpunkt (10', 12', 14') angeordnet sind oder mit dem jeweiligen Messpunkt (10', 12', 14') gekoppelt sind.

**Claims**

1.  Method for generating a triggering signal for a vehicle occupant protection device, in which sensor data for classifying an accident are acquired and evaluated, wherein a relative velocity ($v_{rel}$) of an accident, signals (a(10), a(12), a(14)) from at least two measuring points (10', 12', 14') which are arranged offset in the x direction with a predefined distance (d) between them are evaluated, wherein the time interval ($\Delta t$) between a crash signal which is acquired by a first sensor (10, 12, 14) at a first measuring point (10', 12', 14') and a crash signal which is acquired by a further sensor (10, 12, 14) at a further measuring point (10', 12', 14'), wherein the sensors (10, 12, 14) are embodied as acceleration sensors, **characterized in that** the crash signals each correspond to a peak value of the acceleration signal (a(10), a(12), a(14)) which is acquired by the respective acceleration sensor (10, 12, 14), **in that** the acceleration signals (a(10), a(12), a(14)) from three acceleration sensors (10, 12, 14) of a pedestrian protection device are evaluated, **in that**, in order to determine the relative velocity ($v_{rel}$) of the accident, three measuring points (10', 12', 14') are arranged symmetrically on a vehicle bumper (20), wherein the first measuring point (10') is arranged in the centre of the vehicle bumper (20), a second measuring point (12') is arranged to the left of the first measuring point (10') in the direction of travel and a third measuring point (14') is arranged to the right of the first measuring point (10') in the direction of travel, wherein the predefined distance (d) corresponds to a vertical distance between the first measuring point (10') and a virtual connecting line (b) between the second measuring point (12') and the third measuring point (14'), **in that** the crash signals (a(10), a(12), a(14)) of the at least two measuring points (10', 12', 14') which are arranged offset in the x direction with a predefined distance (d) between them are evaluated in order to determine an impact time and/or an impact location, **in that** the time of a first crash signal which is acquired by one of the acceleration sensors (10, 12, 14) is output as an impact time and/or **in that** by evaluating the signals (a(12), a(14)) of the second and third acceleration sensors (12, 14) it is detected whether a symmetrical impact or an asymmetrical impact is occurring, **in that** the relative velocity ($v_{rel}$) of the accident and the specific impact time and the specific symmetry are made available to a subsequent triggering method for personal protection means, **in that** the start of the accident is determined by defining the first peak value of one of the acceleration signals (a(10), a(12), a(14)) as the impact time.

2.  Method according to Claim 1, **characterized in that** the sensors (10, 12, 14) for acquiring the signals (a(10), a(12), a(14)) are arranged at the respective measuring point (10', 12', 14') or are coupled to the respective measuring point (10', 12', 14').

3.  Method according to one of Claims 1 or 2, **characterized in that** the relative velocity ($V_{rel}$) of the accident is calculated according to the equation $V_{rel} = d/\Delta t$.

4.  Device for generating a triggering signal for a vehicle occupant protection device, in particular for carrying out the method according to one of Claims 1 to 9, which acquires and evaluates sensor data for classifying an accident, having at least a first sensor (10, 12, 14) which acquires a first signal (a(10), a(12), a(14)) at a first measuring point (10', 12', 14'), at least a second sensor (10, 12, 14) which acquires a second signal (a(10), a(12), a(14)) at a second measuring point (10', 12', 14'), wherein the second measuring point (10', 12', 14') is arranged offset with respect to the first measuring point (10', 12', 14') in the x direction at a predefined distance (d) from it, and an evaluation and control unit (30) which evaluates the signals (a(10), a(12), a(14)) of the at least two sensors (10, 12, 14) in order to determine a relative velocity ($v_{rel}$) of the accident, wherein the evaluation and control unit (30) determines a time interval ($\Delta t$) between a crash signal which is acquired by the first sensor (10, 12, 14) and a crash signal which is acquired by the second sensor (10, 12, 14), wherein the at least two sensors (10, 12, 14) are part of a pedestrian protection device, **characterized in that**, in order to determine the relative velocity ($V_{rel}$) of the accident, three acceleration sensors (10, 12, 14) acquire the signals (a(10), a(12), a(14)) from three measuring points (10', 12', 14') which are arranged symmetrically in a vehicle bumper (20), wherein the first measuring point (10') is arranged in the centre of the bumper (20), a second measuring point (12') is arranged to the left of the first measuring point (10') in the direction of travel, and a third measuring point (14') is arranged to the right of the first measuring point (10') in the direction of travel, wherein the predefined distance (d) corresponds to a vertical distance between the first measuring point (10') and a virtual connecting line (b) between the second and third measuring points (12', 14'), **in that** the crash signals each correspond to a peak value of the acceleration signal (a(10), a(12), a(14)) which is acquired by the respective acceleration sensor (10, 12, 14), **in that** the crash signals (a(10), a(12), a (14)) of the at least two measuring points (10', 12', 14') which are arranged offset in the x direction at a predefined distance (d) from one another are evaluated in order to determine an impact time and an impact location, **in that** the time of a first crash signal which is acquired by one of the acceleration sensors (10, 12, 14) is output as an impact time and/or **in that** by evaluating the signals (a(12), a(14)) of the second and third acceleration sensors (12, 14) it is detected whether a symmetrical impact or an asymmetrical impact is occurring, **in that** the specific relative velocity ($v_{rel}$) of

the accident and the specific impact time and the specific symmetry are made available to a subsequent triggering method for personal protection means.

**5.** Device according to Claim 4, **characterized in that** the sensors (10, 12, 14) for acquiring the signals (a(10), a(12), a(14)) are arranged at the respective measuring point (10', 12', 14') or are coupled to the respective measuring point (10', 12', 14').


**Revendications**

**1.** Procédé pour générer un signal de déclenchement d'un dispositif de protection des passagers selon lequel on saisit des données de capteur pour classer l'accident et on les exploite,
pour déterminer une vitesse relative d'accident ($v_{rel}$), on exploite des signaux (a(10), a(12), a(14)) d'au moins deux points de mesure (10', 12', 14') décalés dans la direction x selon une distance prédéfinie (d),
on détermine l'intervalle de temps ($\Delta t$) entre un signal de collision saisi par un premier capteur (10, 12, 14) à un premier point de mesure (10', 12', 14') et par un autre capteur (10, 12, 14) à un autre point de mesure (10', 12', 14'),
on réalise les capteurs (10, 12, 14) comme des capteurs d'accélération, **caractérisé en ce que**
les signaux de collision correspondent respectivement à une valeur maximale du signal d'accélération (a(10), a(12), a(14)), saisi par le capteur d'accélération (10, 12, 14) respectif,
on exploite les signaux d'accélération (a(10), a(12), a(14)), des trois capteurs d'accélération (10, 12, 14) d'un dispositif de protection de piéton, pour déterminer la vitesse relative d'accident ($v_{rel}$), on prévoit trois points de mesure (10', 12', 14') symétriques sur le pare-chocs (20), le premier point de mesure (10') étant situé au milieu du pare-chocs (20) du véhicule, un second point de mesure (12') étant situé à gauche du premier point de mesure (10') selon la direction de déplacement et un troisième point de mesure (14') étant situé à droite du premier point de mesure (10') dans la direction de déplacement,
la distance prédéterminée (d) correspondant à la distance horizontale du premier point de mesure (10') par rapport à la ligne de liaison géométrique (b) entre le second point de mesure (12') et le troisième point de mesure (14'),
les signaux de collision (a(10), a(12), a(14)), d'au moins deux points de mesure (10', 12', 14') décalés dans la direction x selon une distance prédéfinie (d), étant exploités pour déterminer l'instant de la collision et/ou l'emplacement de la collision,
on émet l'instant d'un premier signal de collision saisi par l'un des capteurs d'accélération (10, 12, 14) comme point d'impact et/ou par l'exploitation des signaux (a(10), a(12), a(14)), du second et du troisième capteur d'accélération (12, 14), on détermine si l'on est en présence d'une collision symétrique ou d'une collision asymétrique, on fournit la vitesse relative de collision déterminée ($v_{rel}$) et le point d'impact déterminé ainsi que la symétrie déterminée à un procédé de déclenchement en aval pour les moyens de protection des personnes,
on détermine le début de la collision **en ce qu'**
on fixe la première valeur maximale de l'un des signaux d'accélération (a(10), a(12), a(14)), comme point d'impact.

**2.** Procédé selon la revendication 1,
**caractérisé en ce que**
les capteurs (10, 12, 14) pour saisir les signaux (a(10), a(12), a(14)), sont prévus aux points de mesure respectifs (10', 12', 14') ou sont couplés aux points de mesure respectifs (10', 12', 14').

**3.** Procédé selon la revendication 1 ou 2,
**caractérisé en ce qu'**
on calcule la vitesse relative de collision ($V_{rel}$) selon l'équation $v_{rel} = d/\Delta t$.

**4.** Dispositif pour générer un signal de déclenchement destiné à un dispositif de protection des passagers notamment pour la mise en oeuvre du procédé selon l'une quelconque des revendications 1 à 3, qui saisit des données de capteur pour le classement de la collision et les exploite, et comprend au moins un premier capteur (10, 12, 14) qui saisit un premier signal (a(10), a(12), a(14)), et un premier point de mesure (10', 12', 14'), d'au moins un second capteur (10, 12, 14) qui saisit un second signal (a(10), a(12), a(14)), pour un second point de mesure (10', 12', 14') ;
le second point de mesure (10', 12', 14') étant décalé d'une distance prédéfinie (d) dans la direction x par rapport au premier point de mesure (10', 12', 14'), et une unité d'exploitation et de commande 30 qui exploite les signaux (a(10), a(12), a(14)), d'au moins deux capteurs (10, 12, 14) pour déterminer une vitesse relative de collision ($v_{rel}$),
l'unité d'exploitation et de commande (30) détermine un intervalle de temps ($\Delta t$) entre un signal de collision saisi par un premier capteur (10, 12, 14) et un signal de collision fourni par un second capteur (10, 12, 14),
au moins deux capteurs (10, 12, 14) faisant partie d'un dispositif de protection de piéton,

**caractérisé en ce que**

pour déterminer la vitesse relative de collision ($v_{rel}$), trois capteurs d'accélération (10, 12, 14) saisissent les signaux (a(10), a(12), a(14)), de trois points de mesure (10', 12', 14') installés symétriquement sur un pare-chocs (20) du véhicule, le premier point de mesure (10') étant situé au milieu du pare-chocs (20) du véhicule, un second point de mesure (12') étant situé à gauche suivant la direction de déplacement par rapport au premier point de mesure (10') et un troisième point de mesure (14') étant situé à droite selon la direction de déplacement par rapport au premier point de mesure (10'),

la distance prédéfinie (d) correspondant à la distance horizontale du premier point de mesure (10') par rapport à une ligne de liaison géométrique (b) entre le second et le troisième point de mesure (12', 14'),

les signaux de collision correspondent respectivement à une valeur maximale du signal d'accélération (a(10), a(12), a(14)), saisi par le capteur d'accélération respectif (10, 12, 14),

on exploite les signaux de collision (a(10), a(12), a(14)), d'au moins deux points de mesure (10', 12', 14') décalés dans la direction x de la distance prédéfinie (d) pour déterminer un instant d'impact et un point d'impact, on émet l'instant du premier signal de collision saisi par l'un des capteurs d'accélération (10, 12, 14) comme instant d'impact et/ou par l'exploitation des signaux (a(12), a(14)), du second et du troisième capteur d'accélération (12, 14), on détermine si l'on est en présence d'une collision symétrique ou asymétrique,

on fournit la vitesse relative de collision ($v_{rel}$) déterminée et le point d'impact déterminé ainsi que la symétrie déterminée, à un procédé de déclenchement en aval pour un moyen de protection des personnes.

5. Dispositif selon la revendication 4,
**caractérisé en ce que**
les capteurs (10, 12, 14) pour la saisie des signaux (a(10), a(12), a(14)), sont installés au point de mesure respectif (10', 12', 14') et ils sont couplés au point de mesure respectif (10', 12', 14').

Figur 1

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004018356 A1